# EUROPÄISCHE PATENTSCHRIFT

(11) **EP 2 178 975 B1**
(45) Veröffentlichungstag und Bekanntmachung des Hinweises auf die Patenterteilung: **09.03.2011**
(21) Anmeldenummer: 08787177.8
(22) Anmeldetag: 13.08.2008
(51) Int. Cl.: C08L 67/00

(54) **POLYESTERMISCHUNG MIT VERBESSERTER FLIEßFÄHIGKEIT UND GUTEN MECHANISCHEN EIGENSCHAFTEN**
POLYESTER MIXTURE WITH IMPROVED FLOWABILITY AND GOOD MECHANICAL PROPERTIES
MÉLANGE POLYESTER AVEC FLUIDITÉ AMÉLIORÉE ET BONNES PROPRIÉTÉS MÉCANIQUES

(30) Priorität: 15.08.2007 EP 07114384
(43) Veröffentlichungstag der Anmeldung: 28.04.2010
(73) Patentinhaber: BASF SE, 67056 Ludwigshafen (DE)
(72) Erfinder: METTLACH, Claudia, 68167 Mannheim (DE); EIPPER, Andreas, 67067 Ludwigshafen (DE); BRUCHMANN, Bernd, 67251 Freinsheim (DE); WEBER, Martin, 67487 Maikammer (DE); YAMAMOTO, Motonori, 68199 Mannheim (DE); TEJUJA, Chirag, Singapur 11825 (SG); WEISS, Carsten, 71640 Ludwigsburg (DE)
(86) Internationale Anmeldenummer: PCT/EP2008/060626
(87) Internationale Veröffentlichungsnummer: WO 2009/021967

(56) Entgegenhaltungen:
- DE-A1- 10 309 564
- DE-A1-102005 034 999
- US-A- 3 651 014

## Beschreibung

Die Erfindung betrifft Polyestermischungen gemäß Auspruch 1.
wobei die Summe der Gewichtsprozente der Komponenten A) bis D) 100 % ergibt; deren Verwendung sowie Fasern, Folien und Formkörper erhältlich aus diesen Polyestermischungen.

Im Stand der Technik sind bereits Ansätze bekannt, die mechanischen Eigenschaften bzw. das Fließverhalten von Polyestern wie PBT zu verbessern.

In WO 2004/078844 werden Polyestermischungen aus PBT (Komponente A) und einem aliphatisch-aromatischen Polyester (Komponente C) zur Verbesserung der Biegesteifigkeit insbesondere von Borsten beschrieben. Fließverbesserer kommen in WO 2004/078844 nicht zum Einsatz.

Aus WO 2005/075565 sind fließverbesserte Polyestermischungen bekannt. Als Fließverbesserer gelangen hoch- und hyperverzweigte Polycarbonate (Komponente B1) zum Einsatz. Die fließverbesserten Polyestermischungen können jedoch hinsichtlich ihrer mechanischen Eigenschaften wie beispielsweise der Streck- oder Bruchdehnung nicht immer voll befriedigen.

Schließlich sind in WO 2006/018127 Polyestermischungen beschrieben, die sowohl Fließverbesserer als auch Kautschuke als Schlagzähmodifizierer (Komponente D1) enthalten. Die Mechanik lässt sich in diesen Mischungen verbessern, allerdings verschlechtert sich durch den Zusatz der Kautschuke das Fließverhalten wieder.

Es bestand demnach die Aufgabe, einen hoch fließfähigen Polyester mit deutlich verbesserten rheologischen Eigenschaften zu finden, der gleichzeitig über hervorragende mechanische Eigenschaften verfügt.

Überraschenderweise wurde die Aufgabe durch die erfindungsgemäßen Polyestermischungen gelöst, die eine Kombination aus Fließverbesserern (Komponente B) und aliphatisch-aromatischen Polyestern (Komponente C) einsetzen.

In einer bevorzugten Ausführungsform können Schlagzähmodifizierer (Komponente D1) zugesetzt werden. Interessanterweise verschlechtert in Anwesenheit der aliphatisch-aromatischen Polyester der Zusatz von Schlagzähmodifizierern das Fließverhalten der Polyestermischungen nicht signifikant.

In einer weiteren bevorzugten Ausführungsform werden faserverstärkte Polyestermischungen bereitgestellt.

Die erfindungsgemäßen Polyestermischungen werden im folgenden näher beschrieben.

Als Komponente (A) enthalten die erfindungsgemäßen Formmassen 30 bis 98, bevorzugt 50 bis 98 und insbesondere 90 bis 97 Gew.-% mindestens eines thermoplastischen Polyesters, welcher verschieden von den Komponenten B2) und C) ist.

Allgemein werden Polyester A) auf Basis von aromatischen Dicarbonsäuren und einer aliphatischen oder aromatischen Dihydroxyverbindung verwendet. Bevorzugt sind Poly-C₂-C₁₀-alkylenterephthalate, insbesondere bevorzugt ist Polybutylenterephthalat (PBT).

Derartige Polyalkylenterephthalate sind an sich bekannt und in der Literatur beschrieben.

Eine sehr detaillierte Beschreibung der Komponente A im Hinblick unter anderem auf
- Teilersatz der Terephthalsäure durch andere Dicarbonsäuren,
- Ersatz der aliphatischen Diolkomponente durch aromatische Diole (Phenole).
- Polyesterblockcopolymere, Copolycarbonate, Polycarbonate
- der Herstellung von Polyestern wie PBT unter anderem aus Recyclisaten,
ist in den Schriften WO 2005/075565 und WO 2006/018127 zu finden, auf die hier ausdrücklich verwiesen wird.

Als Komponente B) enthalten die erfindungsgemäßen Formmassen 0,01 bis 15, vorzugsweise 0,3 bis 15 und insbesondere 0,5 bis 10 Gew.-% B1) mindestens eines hoch- oder hyperverzweigten Polycarbonates, mit einer OH-Zahl von 1 bis 600, vorzugsweise 10 bis 550 und insbesondere von 50 bis 550 mg KOH/g Polycarbonat (gemäß DIN 53240, Teil 2) oder mindestens eines hyperverzweigten Polyesters als Komponente B2) oder deren Mischungen wie nachstehend erläutert wird.

Unter hyperverzweigten Polycarbonaten B1) werden im Rahmen dieser Erfindung unvernetzte Makromoleküle mit Hydroxyl- und Carbonatgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Vorzugsweise weist die Komponente B1) ein Zahlenmittel des Molekulargewichtes Mn von 100 bis 15000, vorzugsweise von 200 bis 12000 und insbesondere von 500 bis 10000 g/mol (GPC, Standard PMMA).

Die Glasübergangstemperatur Tg beträgt insbesondere von -80°C bis +140, vorzugsweise von -60 bis 120°C (gemäß DSC, DIN 53765).

Insbesondere beträgt die Viskosität (mPas) bei 23°C (gemäß DIN 53019) von 50 bis 200000, insbesondere von 100 bis 150000 und ganz besonders bevorzugt von 200 bis 100000.

Eine sehr detaillierte Beschreibung der Komponente B1 im Hinblick unter anderem auf
- die Definition "hyperverzweigt" und "dendrimer",
- Herstellverfahren betreffend Kondensationsprodukte (K) und Polykondensationsprodukte (P),
- Auswahl der geeigneten Diolkomponente,
- Hochfunktionelles Polycarbonat,
ist in den Schriften WO 2005/075565 und WO 2006/018127 zu finden, auf die hier ausdrücklich verwiesen wird.

Als Komponente B2) können die erfindungsgemäßen Formmassen mindestens eines hyperverzweigten Polyesters des Typs AxBy enthalten, wobei

| | |
|---|---|
| x | mindestens 1,1 vorzugsweise mindestens 1,3, insbesondere mindestens 2 |
| y | mindestens 2,1, vorzugsweise mindestens 2,5, insbesondere mindestens 3 |

beträgt.

Selbstverständlich können als Einheiten A bzw. B auch Mischungen eingesetzt werden.

Unter einem Polyester des Typs AxBy versteht man ein Kondensat, das sich aus einem x-funktionellen Molekül A und einem y-funktionellen Molekül B aufbaut. Beispielsweise sei genannt ein Polyester aus Adipinsäure als Molekül A (x = 2) und Glycerin als Molekül B (y = 3).

Unter hyperverzweigten Polyestern B2) werden im Rahmen dieser Erfindung unvernetzte Makromoleküle mit Hydroxyl- und Carboxylgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Die Komponente B2) weist vorzugsweise ein Mn von 300 bis 30 000, insbesondere von 400 bis 25000 und ganz besonders von 500 bis 20000 g/mol auf, bestimmt mittels GPC, Standard PMMA, Laufmittel Dimethylacetamid.

Vorzugsweise weist B2) eine OH-Zahl von 0 bis 600, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester.

Die Tg beträgt vorzugsweise von -50°C bis 140°C und insbesondere von -50 bis 100°C (mittels DSC, nach DIN 53765).

Insbesondere solche Komponenten B2) sind bevorzugt, in denen mindestens eine OH- bzw. COOH-Zahl größer 0, vorzugsweise größer 0,1 und insbesondere größer 0,5 ist.

Die erfindungsgemäße Komponente B2) ist durch die in WO 2006/018127 beschriebenen Verfahren erhältlich, indem man
(a) eine oder mehrere Dicarbonsäuren oder eines oder mehrere Derivate derselben mit einem oder mehreren mindestens trifunktionellen Alkoholen
   oder
(b) eine oder mehrere Tricarbonsäuren oder höhere Polycarbonsäuren oder eines oder mehrere Derivate derselben mit einem oder mehreren Diolen

Eine sehr detaillierte Beschreibung der Komponente B2 im Hinblick unter anderem auf
- die Definition "hyperverzweigt" und "dendrimer",
- die bevorzugten Herstellverfahren (s. die o.g. Varianten a und b)
- geeignete Säurekomponente
- geeignete Alkoholkomponente
ist in WO 2006/018127 zu finden, auf die hier ausdrücklich verwiesen wird.

Die erfindungsgemäßen Polyester haben ein Molekulargewicht M_{w} von 500 bis 50 000 g/mol, bevorzugt 1000 bis 20 000, besonders bevorzugt 1000 bis 19 000. Die Polydispersität beträgt 1,2 bis 50, bevorzugt 1,4 bis 40, besonders bevorzugt 1,5 bis 30 und ganz besonders bevorzugt 1,5 bis 10. Sie sind üblicherweise gut löslich, d.h. man kann klare Lösungen mit bis zu 50 Gew.-%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Die erfindungsgemäßen hochfunktionellen hyperverzweigten Polyester sind carboxyterminiert, carboxy- und Hydroxylgruppen-terminiert und vorzugsweise Hydroxylgruppen-terminiert.

Die Verhältnisse der Komponenten B1) zu B2) betragen vorzugsweise von 1 : 20 bis 20 : 1, insbesondere von 1 : 15 bis 15 : 1 und ganz besonders von 1 : 5 bis 5 : 1, wenn diese in Mischung eingesetzt werden.

Als Komponente C) ist ein Copolymerisat aus
ca₁) 40 bis 60 Gew.-% bezogen auf das Gesamtgewicht der Komponenten a1) und a2) mindestens einer Bernstein-, Adipin, oder Sebazinsäure oder deren esterbildende Derivate oder Mischungen davon,
ca₂) 40 bis 60 Gew.-% bezogen auf das Gesamtgewicht der Komponenten a1) und a2) Terephthalsäure oder deren esterbildende Derivate oder Mischungen davon,
cb) 100 mol-% bezogen auf die Komponenten a1) und a2) 1,4-Butandiol oder 1,3-Propandiol oder Mischungen davon als Diolkomponente,
cd₁) 0 bis 1 Gew.-% einer Verbindung mit mindestens drei zur Esterbildung befähigten Gruppen als Verzweiger;
cd₂) 0 bis 2 Gew.-% eines Diisocyanats als Kettenverlängerer, gemeint.

Die genannten teilaromatischen Polyester C sind in der Regel biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch in mindestens einem der drei in DIN V 54900-2 (Vornorm, Stand September 1998) definierten Verfahren einen prozentualen Grad des biologischen Abbaus von mindestens 60 % aufweist.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Die genannten teilaromatischen Polyester können Hydroxy- und/oder Carboxylendgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden.

Als Komponente (D1) enthalten die erfindungsgemäßen thermoplastischen Formmassen 1 bis 20, vorzugsweise 1 bis 15 Gew.-% eines schlagzähmodifizierenden Polymeren (oft auch als kautschukelastisches Polymerisat oder Elastomer bezeichnet).

Bevorzugte kautschukelastische Polymerisate sind die in der WO 2006/018127 beschriebenen Polymerisate auf Basis von Olefinen, die aus folgenden Komponenten aufgebaut sind:
d₁) 40-100 Gew.-% vorzugsweise 55 bis 79,5 Gew.-% mindestens eines α-Olefins mit 2 bis 8 C-Atomen,
d₂) 0-90 Gew.-% eines Diens,
d₃) 0-45 Gew.-% bevorzugt 20 bis 40 Gew.-% eines C₁-C₁₂-Alkylesters der Acrylsäure oder Methacrylsäure oder Mischungen derartiger Ester,
d₄) 0-40 Gew.-% bevorzugt 0,5 bis 20 Gew.-% einer ethylenisch ungesättigten Mono- oder Dicarbonsäure oder eines funktionellen Derivates einer solchen Säure,
d₅) 0-40 Gew.-% eines Epoxygruppen enthaltenden Monomeren,
d₆) 0-5 Gew.-% sonstiger radikalisch polymerisierbaren Monomerer,
mit der Maßgabe, dass die Komponente (D1) kein Olefinhomopolymerisat ist, denn hiermit, z.B. mit Polyethylen, erzielt man die vorteilhaften Wirkungen nicht in gleichem Maße.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.
d₁) 55 - 79,5 Gew.-% mindestens eines α-Olefins mit 2 - 8 C-Atomen,
d₃) 20 - 40 Gew.-% eines C₁-C₁₂-Alkylesters der Acrylsäure oder Methacrylsäure oder Mischungen derartiger Ester
d₄) 0,5 - 20 Gew.-% einer ethylenisch ungesättigten Mono- oder Dicarbonsäure oder einem funktionellen Derivat einer solchen Säure
d₅) 0-20 Gew.-% eines Epoxygruppen enthaltenden Monomeren.

In der WO 2006/018127, auf die hier ausdrücklich Bezug genommen wird, werden diese Kautschuke detailliert beschrieben.

Insbesondere bevorzugte Komponenten D1) sind beispielsweise MBS-Kautschuke aufgebaut aus:
65 bis 99 Gew.-% eines Kerns aus
d₂) 90 bis 100 Gew.-% eines Diens, 0 bis 10 Gew.-% weiterer vernetzbarer Monomerer
   sowie 1 bis 35 Gew.-% einer Schale aus
d₇) 1 bis 30 Gew.-% Styrol oder ungesättigten Styrolen oder deren Mischungen und
d₈) 70 bis 100 Gew.-% mindestens eines ungesättigten Nitrils.

In der WO 2006/018127, auf die hier ausdrücklich Bezug genommen wird, werden diese Kautschuke detailliert beschrieben.

Eine weitere Gruppe bevorzugter Olefinpolymerisate sind Copolymere von α-Olefinen mit 2 - 8 C-Atomen, insbesondere des Ethylens, mit C₁-C₈-Alkylestern der Acrylsäure und/oder Methacrylsäure.

Diese Olefinpolymerisate wie auch die einzelnen Komponenten d3 bis d8 werden in der WO 2006/018127, auf die hier ausdrücklich Bezug genommen wird, im einzelnen genauer beschrieben.

Besonders bevorzugt sind Olefinpolymerisate aus:

| | |
|---|---|
| 50 bis 98,9 | insbesondere 55 bis 65 Gew.-% Ethylen, |
| 0,1 bis 20, | insbesondere 0,15 bis 10 Gew.-% Glycidylacrylat und/oder Glycidylmethacrylat, Acrylsäure und/oder Maleinsäureanhydrid, |
| 1 bis 45, | insbesondere 25 bis 40 Gew.-% n-Butylacrylat und/oder 2-Ethylhexylacrylat, sowie |
| 0 bis 10, | insbesondere 0,1 bis 3 Gew.-% Maleinsäureanhydrid oder Fumarsäure oder deren Mischungen, |

die ebenfalls in der WO 2006/018127 beschrieben werden.

Weiterhin bevorzugt sind Acrylat Kautschuke D1) aufgebaut aus:
a) 70 bis 90 Gew.-% und vorzugsweise 75 bis 85 Gew.-% vernetzten elastomeren Kern, der sich zusammensetzt aus:
   1) 20 bis 90 Gew.-% eines Kerns, der aus einem Copolymer (I) eines n-Alkylacrylats, dessen Alkylgruppe 5 bis 12 Kohlenstoffatome und vorzugsweise 5 bis 8 Kohlenstoffatome aufweist, oder eines Gemisches von Alkylacrylaten, wobei die Anzahl der Kohlenstoffatome geradkettigen oder verzweigten Alkylgruppen im Bereich von 2 bis 12 und vorzugsweise 4 bis 8 liegt; eines polyfunktionellen Vernetzungsmittels, wobei dieses Molekül ungesättigte Gruppen und darunter mindestens eine Gruppe vom Vinyltyp CH₂=C< aufweist, und gegebenenfalls eines polyfunktionellen Pfropfungsmittels besteht wobei dieses Molekül ungesättigte Gruppen und darunter mindestens eine Gruppe vom Allyltyp CH₂=CH-CH₂- aufweist, wobei der Kern eine molaren Menge des Vernetzungsmittels und gegebenenfalls des Pfropfungsmittels von 0,05 bis 5 % und vorzugsweise in einer Menge von 0,5 bis 1,5 Gew. % enthält,
   2) 80 bis 10 Gew.-% einer Schale, die aus einem Copolymer (II) eines n-Alkylacrylats, dessen Alkylgruppe 4 bis 12 Kohlenstoffatome und vorzugsweise 4 bis 8 Kohlenstoffatome aufweist, oder eines Gemisches von Alkylacrylaten gemäß der unter 1) angegebenen Definition und eines polyfunktionellen Pfropfungsmittels besteht, wobei dieses Molekül ungesättigte Gruppen und darunter mindestens eine Gruppe vom Allyltyp CH₂=CH-CH₂- aufweist, wobei die Schale das Pfropfungsmittel in einer molaren Menge von 0,05 bis 2,5 % und vorzugsweise in einer Menge von 0,5 bis 1,5 Gew.-% enthält, und
b) 30 bis 10 Gew.-% und vorzugsweise 25 bis 15 Gew.-% einer auf den Kein gepfropften Schale, die aus einem Alkylmethacrylatpolymer, dessen Alkylgruppe 1 bis 4 Kohlenstoffatome aufweist, oder aus einem statistischen Copolymer eines Alkylmethacrylats, dessen Alkylgnppe 1 bis 4 Kohlenstoffatome aufweist, und eines Alkylacrylats besteht. dessen Alkylgruppe 1 bis 8 Kohlenstoffatome aufweist, wobei das Alkylacrylat in einer molaren Menge von 5 bis 40 % und vorzugsweise im Bereich von 10 bis 20 % enthalten ist.

Eine detailliertere Beschreibung der Acrylat Kautschuke D1 wird in der WO 2006/018127 gegeben, auf die hier ausdrücklich Bezug genommen wird.

Weiterhin kann als Komponente D1 ein thermoplastisches Elastomer auf Basis TPEE (Thermoplastische Polyester-Elastomere). Diese Produkte sind unter anderem unter der Marke Pibiflex® beispielsweise E4090 der Firma P-Group, Italien Hytrel® (DuPont), Arnitel® (Akzo sowei Pelprene® (Toyobo Co. Ltd) im Handel. Diese Produkte weisen einen kristallinen PBT-Teil und einen Polyethylenglykol-Teil als Weichsegment auf und sind detailliert in der Schrift WO 2007/009930 beschrieben, auf die hier ausdrücklich Bezug genommen wird.

TPEE weist kurzkettige Bausteine der Formel:

-O-D-O-CO-R-CO (I)

und langkettige Bausteine mit der Formel:

-O-G-OCO-R-CO- (IIa)

-O-D-O-CO-R-CO (IIb)

auf, wobei
- D sich von einem Alkylenglykol wie beispielsweise 1,4-Butandiol ableitet und ein Molekulargewicht von ca. 250 aufweist;
- R sich von einer Carbonsäure wie beispielsweise Terephthalsäure ableitet und ein Molekulargewicht von unter 300 aufweist,
- G leitet sich von einem langkettigen Diol mit einem Molekulargewicht von ca. 250 bis 6000 ab, und
- O bedeutet Sauerstoff.

Als weitere bevorzugte Schlagzähmodifizierer D1 können thermoplastische Elastomere des Typs TPU wie sie beispielsweise unter der Marke Elastollan® der Firma Elastogran erhältlich sind - eingesetzt werden. Die Elastomere weisen in der Regel ein Weichsegment, gebildet aus einem Diisocyanat und einem langkettigen Diol, wobei letzteres wiederum Ether oder Estergruppen enthalten kann, und ein Hartsegment, gebildet aus Diisocyanaten und kurzkettigen Diolen, auf. Je nach Zusammensetzung des langkettigen Diols spricht man von Polyester-Polyolen oder Polyether-Polyolen.

Der bevorzugte Mengenanteil des Schlagzähmodifikators D1, der in das thermoplastische Polymer eingebracht wird, liegt im Bereich von 1 bis 20 Gew.-% und vorzugsweise 1 bis 15 Gew.-% auf 100 Gew.-% des verwendeten thermoplastischen Polymers.

Als faser- oder teilchenförmige Füllstoffe D2) seien Kohlenstofffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 30 % eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden. Die Glasfasern weisen in der Regel eine Dicke von ca. 10 µm auf.

Die faserförmigen Füllstoffe können zur besseren Verträglichkeit mit dem Thermoplasten mit einer Silanverbindung oberflächlich vorbehandelt sein. Eine genauere Beschreibung der Silanmodifizierung ist in der WO 2006/018127 zu finden, auf die hier ausdrücklich Bezug genommen werden soll.

Weiterhin können die erfindungsgemäßen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Nukleierungsmittel und Verträglichkeitsvermittler enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylenhexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µ m, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer weiteren bevorzugten Arbeitsweise können die Komponenten A, C sowie gegebenenfalls D1 vorgemischt in den Extruder gegeben werden, Komponente B kann vorzugsweise hot feed zugetropft werden und die Komponente D2 kann ebenfalls hot feed zu einem späten Zeitpunkt in den Extruder gegeben werden. Am Ende kann das Extrudat gegebenenfalls konfektioniert und granuliert werden.

Die erfindungsgemäßen thermoplastischen Formmassen zeichnen sich durch eine gute Fließfähigkeit bei gleichzeitig guter Mechanik aus.

Insbesondere ist die Verarbeitung der einzelnen Komponenten (ohne Verklumpung oder Verbackung) problemlos und in kurzen Zykluszeiten möglich, so dass insbesondere dünnwändige Bauteile als Anwendung in Frage kommen.

Der Einsatz für einen fließverbesserten Polyester ist in nahezu sämtlichen Spritzgussanwendungen denkbar. Die Fließverbesserung ermöglicht eine niedrigere Schmelzetemperatur und kann somit zu einer deutlichen Absenkung der gesamten Zykluszeit des Spritzgussprozesses führen (Absenkung der Herstellkosten eines Spritzgussteiles!). Des weiteren sind niedrigere Einspritzdrücke während der Verarbeitung notwendig, so dass eine geringere Gesamtschließkraft am Spritzgusswerkzeug benötigt wird (niedrigere Investitionskosten bei der Spritzgussmaschine).

Neben den Verbesserungen des Spritzgussprozesses kann die Absenkung der Schmelzeviskosität zu deutlichen Vorteilen bei der eigentlichen Bauteilgestaltung führen. So können dünnwandige Anwendungen, die z.B. bisher mit gefüllten Polyester-Typen nicht realisierbar waren, über Spritzguss hergestellt werden. Analog hierzu ist bei bestehenden Applikationen durch den Einsatz verstärkter aber leichter fließender Polyester-Typen eine Reduzierung der Wandstärken und somit eine Reduzierung der Teilegewichte denkbar.

Diese eignen sich zur Herstellung von Fasern, Folien und Formkörpern jeglicher Art, insbesondere für Anwendungen als Stecker, Schalter, Gehäuseteile, Gehäusedeckel, Scheinwerferhintergrund (Bezel), Brausenkopf, Armaturen, Bügeleisen, Drehschalter, Herdknöpfe, Friteusendeckel, Türgriffe, (Rück-)spiegelgehäuse, (Heck-)scheibenwischer, Lichtwellenleiterummantelungen.

Im E/E-Bereich können mit dem fließverbesserten Polyestern Stecker, Steckerteile, Steckverbinder, Kabelbaumkomponenten, Schaltungsträger, Schaltungsträgerkomponenten, dreidimensional spritzgegossene Schaltungsträger, elektrische Verbindungselemente, mechatronische Komponenten oder optoelektronische Bauelemente hergestellt werden.

Im Auto-Innenraum ist eine Verwendung für Armaturentafeln, Lenkstockschalter, Sitzteile, Kopfstützen, Mittelkonsolen, Getriebe-Komponenten und Tür-module, im Auto-Außenraum für Türgriffe, Frontscheinwerferkomponenten, Außenspiegelkomponenten, Scheibenwischerkomponenten, Scheibenwischerschutzgehäuse, Ziergitter, Dachreling, Schiebedachrahmen sowie Karosserieaußenteile möglich.

Für den Küchen- und Haushaltsbereich ist der Einsatz des fließverbesserten Polyester zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte möglich.

Im Bereich der Medizintechnik können Inhalatorengehäuse, und deren Komponenten durch fließverbessertes Polyester einfacher realisiert werden.

Allgemeine Arbeitsvorschrift für die Herstellung der erfindungsgemäßen Polyestermischungen:

Die in den Beispielen beschriebenen Compounds wurden jeweils auf einem Zweischneckenextruder ZSK 30 mit einer Verarbeitungstemperatur von 260 °C hergestellt. Dabei wurde PBT mit den Additiven C und gegebenenfalls D1 als Premix vorgemischt und in den Einzug des Extruders gegeben. Die Glasfaser (D2) wurde hot feed in der Mitte des Extruders zugegeben. Der Fließverbesserer (B) wurde mittels einer Pumpe hot feed in die Polymerschmelze getropft. Optional kann das Additiv B auch mit in den Einzug getropft oder auf den Premix aufgetrommelt werden. Zur Prüfung der mechanischen Eigenschaften wurden Schulterstäbe nach ISO 527-2 hergestellt und der Zugversuch nach ISO 527-2 durchgeführt (Ausnahme Beispiel 3, siehe Beschreibung). Des weiteren wurde die Schlagzähigkeit nach IS0179-2 bestimmt, die Viskositätszahl (VZ : ISO 1628 in Phenol/o-Dichlorbenzol 1:1, 25 °C) und die Fließfähigkeit mittels MVR (ISO 1133)getestet.

### Einsatzstoffe

Komponente A) (aromatischer Polyester):
- A1) Ultradur® B4500 der Firma BASF Aktiengesellschaft (PBT VZ 130)
- A2) Ultradur® B4520 der Firma BASF Aktiengesellschaft (PBT VZ 130+ 0,65 Gew.-% Pentaerythrittetrastearat als Schmiermittel)

Komponente B) (Fließverbesserer):
- Polycarbonat hergestellt aus Diethylcarbonat und einem Polyol (Trimethylolpropan x 1,2 Ethylenoxid) siehe Beispiel B/6 in der WO 2005/075565)

Komponente C) (teilaromatischer Polyester):
- Ecoflex® FBX 7011 der Firma BASF Aktiengesellschaft

Komponente D1) (Schlagzähmodifizierer):
- D1.1): Pipiflex® E4090 der Firma P-Group, Italien (TPEE)
- D1.2) Paraloid® BXL 3670 der Firma Rohm&Haas (MBS-Kautschuk)

Komponente D2 (Glasfaser):
- Glasfaser PPG 3786 der Firma PPG mit einer Dicke von 10 µm

**Tabelle 1**

| Herstellung von unverstärktem fließverbesserten PBT mit guter Mechanik durch Zugabe von Komponente C | | | |
|---|---|---|---|
| Einsatzstoffe | V1 | 2 | V3 |
| A1 | 98,95 | 93,95 | 94,35 |
| Pentaerythrittetrastearat | 0,65 | 0,65 | 0,65 |
| B | 0,40 | 0,40 | |
| C | | 5,00 | 5,00 |
| VZ[ml/g] | 111,3 | 110,7 | 126,0 |
| MVR 250°C 2,16kg [cm³/10min] | 40,0 | 45,9 | 28,5 |
| HDT/B / Standardabw. [°C] | --- | 119,8/127,3 | 105,7 |
| | | | |
| E-Modul [MPa] | 2567 | 2152 | 2250 |
| Strecksp. σ_M[MPa] | 56,86 | 51,37 | 51,95 |
| Bruchsp. σ_B [MPa] | 22,53 | 32,68 | 35,05 |
| Streckdehn. ε_M [%] | 3,6 | 9,82 | 9,58 |
| Bruchdehn. ε_tB[%] | 69,22 | 228,68 | 251,09 |
| Charpy gek. [kJ/m²] | 4,6 | 5,4 | 5,8 |
| Charpy ung. 23°C [kJ/m²] | 232,8 | 250/278 | 294 |
| Charpy ung.-30°C [kJ/m²] | 165,0 | 156,0 | 220,3 |

**Tabelle 2**

| Herstellung von unverstärktem fließverbesserten PBT mit guter Mechanik durch Zugabe von Komponente C und Schlagzähmodifizierern D1 | | | | | | | | |
|---|---|---|---|---|---|---|---|---|
| Einsatzstoffe | V4 | V5 | V6 | 7 | 8 | V9 | 10 | 11 |
| A1 | 99,35 | 98,85 | 93,85 | 93,85 | 92,85 | 93,85 | 93,85 | 92,85 |
| Pentaerythrittetrastearat | 0,65 | 0,65 | 0,65 | 0,65 | 0,65 | 0,65 | 0,65 | 0,65 |
| B | | 0,50 | 0,50 | 0,50 | 0,50 | 0,50 | 0,50 | 0,50 |
| C | | | | 3,00 | 3,00 | | 3,00 | 3,00 |
| D1.1 | | | 5,00 | 2,00 | 3,00 | | | |
| D1.2 | | | | | | 5,00 | 2,00 | 3,00 |
| VZ Granulat[ml/g] | 121,5 | 109,7 | 111,5 | 110,5 | 115,2 | 102,8 | 105,9 | 106,7 |
| MVR 250°C 2,16kg [cm³/10min] | 29,1 | 54,0 | 47,0 | 51,7 | 50,2 | 45,0 | 52,2 | 49,1 |
| HDT/B/Standardabw. [°C] | 125,1/3,9 | 120,8/11,0 | 127,7 | 119,2 | 131,7/2,6 | 131,1 | 114,8/4,1 | 118 |
| E-Modul[MPa] | 2661 | 2663 | 2385 | 2226 | 2139 | 2314 | 2184 | 2156 |
| Strecksp. σ_M[MPa] | 57,63 | 58,4 | 53,47 | 52,57 | 52,39 | 47,90 | 49,38 | 50,44 |
| Bruchsp. σ_B [MPa] | 22,46 | 47,56 | 42,72 | 18,56 | 16,67 | 18,72 | 17,36 | 19,13 |
| Streckdehn. ε_M[%] | 8,06 | 7,5 | 6,85 | 10,21 | 9,74 | 3,34 | 4,40 | 3,93 |
| Bruchdehn. ε_tB[%] | 49,61 | 16,83 | 17,89 | 44,04 | 33,93 | 80,65 | 125,72 | 50,9 |
| Charpy gek. [kJ/m²] | 5 | 3,9 | 5,6 | 4,4 | 5,6 | 7,3 | 6,2 | 7,2 |
| Charpy ung. 23°C [kJ/m²] | 298 | 196 | 196 | 200 | 199,5 | 222 | 195 | 195 |
| Charpy ung.-30°C [kJ/m²] | 191 | 153 | 170 | 169,9 | 143 | 222,5 | 175 | 170 |

**Tabelle 3**

| Herstellung von Glasfaser verstärktem fließverbesserten PBT mit guter Mechanik durch Zugabe von Komponente C | | | | |
|---|---|---|---|---|
| | Einsatzstoffe | V12 | V13 | 14 |
| | A2 | 70,00 | 69,25 | 64,50 |
| | B | | 0,50 | 0,50 |
| | C | | | 5,00 |
| | D2 | 30,00 | 30,00 | 30,00 |
| Ergebnisse: | | | | |

| Analytik: | | V12 | V13 | 14 |
|---|---|---|---|---|
| | VZ [ml/g] | 108,8 | 98,6 | 94,8 |
| | Glührückstand [%] | 29,4 | 30,1 | 29,6 |
| | MVR 275°C 2,16kg [cm³/10min] | 25,5 | 48,5 | 58,8 |
| Mechanik: | | | | |
| längs gefertigt aus Platten Außen Stab1+Stab5 | E-Modul [MPa] | 9054 | 9019 | 8097 |
| | Strecksp. σ_M[MPa] | 120,4 | 125,01 | 109,17 |
| | Bruchsp. σ_B [MPa] | 120,4 | 125,01 | 109,17 |
| | Streckdehn. ε_M[%] | 2,5 | 2,29 | 2,28 |
| | Bruchdehn. ε_B/ε_tB[%] | 2,5 | 2,29 | 2,28 |
| längs gefertigt aus Platten Mitte Stab2+Stab4 | E-Modul [MPa] | 8653 | 8743 | 7723 |
| | Strecksp. σ_M[MPa] | 115,78 | 120,56 | 105,14 |
| | Bruchsp. σ_B[MPa] | 115,78 | 120,56 | 105,14 |
| | Streckdehn. ε_M [%] | 2,65 | 2,27 | 2,4 |
| | Bruchdehn. ε_B [%] | 2,65 | 2,27 | 2,4 |
| längs gefertigt aus Platten Innen Stab3 | E-Modul [MPa] | 8610 | 8703 | 7666 |
| | Strecksp. σ_M[MPa] | 114,82 | 120,48 | 104,29 |
| | Bruchsp. σ_B [MPa] | 114,82 | 120,48 | 104,29 |
| | Streckdehn. ε_M [%] | 2,47 | 2,27 | 2,36 |
| | Bruchdehn. ε_B [%] | 2,47 | 2,27 | 2,36 |
| quer gefertigt aus Platten Angußnah Stab 1 | E-Modul [MPa] | 4764 | 4703 | 3908 |
| | Strecksp. σ_M[MPa] | 63,64 | 64,15 | 55,75 |
| | Bruchsp. σ_B [MPa] | 63,64 | 64,15 | 55,75 |
| | Streckdehn. ε_M [%] | 2,42 | 2,49 | 2,56 |
| | Bruchdehn. ε_B/ε_tB[%] | 2,42 | 2,49 | 2,56 |
| quer gefertigt aus Platten Mitte Stab 3 | E-Modul [MPa] | 4550 | 4619 | 3763 |
| | Strecksp. σ_M[MPa] | 63,27 | 64,95 | 55,8 |
| | Bruchsp. σ_B [MPa] | 63,20 | 64,95 | 55,8 |
| | Streckdehn. ε_M [%] | 2,76 | 2,65 | 2,82 |
| | Einsatzstoffe | V12 | V13 | 14 |
| | Bruchdehn. ε_B/ε_tB[%] | 2,78 | 2,65 | 2,82 |
| quer gefertigt aus Platten Angußfern Stab 5 | E-Modul [MPa] | 4775 | 4727 | 4004 |
| | Strecksp. σ_M[MPa] | 70,02 | 71,09 | 61,77 |
| | Bruchsp. σ_B[MPa] | 69,64 | 70,98 | 61,77 |
| | Streckdehn. ε_M[%] | 3,22 | 3,12 | 3,01 |
| | Bruchdehn. ε_B/ε_tB[%] | 3,23 | 3,05 | 3,01 |

Die in Tabelle 3 gezeigten mechanischen Daten wurden aus Zugversuchen nach ISO 527-2 an 2 mm dicken Zugstäben, die aus Platten ausgeschnitten waren, erhalten.

Die in Tabelle 1 aufgeführten Ergebnisse zeigen, dass die Mechanik von Spritzgussteilen durch Zugabe von teilaromatischen Polyestern C wie beispielsweise Ecoflex entscheidend verbessert werden kann. Besonders auffällig ist das verbesserte Bruchdehnungs-Verhalten durch Zugabe von teilaromatischen Polyestern C (s. Beispiel 2) im Vergleich zu PBT, das lediglich Fließverbesserer enthält (Beispiel V1).

Die in Tabelle 2 zusammengefassten Daten zeigen, dass der Einsatz von Schlagzähmodifizierern D1 (V6 und V9) die Fließfähigkeit der Polyestermischungen (V5) verschlechtert. In Gegenwart der teilaromatischen Polyester C ist dieser Effekt deutlich abgeschwächt (s. Beispiele 7, 8 , 10 und 11). Zum anderen weisen aus diesen Mischungen hergestellte Formteile hervorragende mechanische Eigenschaften auf.

Die in Tabelle 3 gezeigten Daten zeigen, dass die Zugabe von teilaromatischen Polyestern C einen ähnlichen positiven Effekt bei glasfaserverstärktem PBT bewirkt.

## Patentansprüche

1. Polyestermischungen, enthaltend
A) 30 bis 98 Gew.-% mindestens eines thermoplastischen aromatischen Polyesters,
B) 0,01 bis 15 Gew.-%
B1) mindestens eines hoch- oder hyperverzweigten Polycarbonates oder
B2) mindestens eines hoch- oder hyperverzweigten Polyesters oder deren Mischungen
C) 1 bis 20 Gew.-% eines Polyesters aus
ca₁) 40 bis 60 Gew.-% bezogen auf das Gesamtgewicht der Komponenten a1) und a2) mindestens einer Bernstein-, Adipin, oder Sebazinsäure oder deren esterbildende Derivate oder Mischungen davon,
ca₂) 40 bis 60 Gew.-% bezogen auf das Gesamtgewicht der Komponenten a1) und a2) Terephthalsäure oder deren esterbildende Derivate oder Mischungen davon,
cb) 100 mol-% bezogen auf die Komponenten a1) und a2) 1,4-Butandiol oder 1,3-Propandiol oder Mischungen davon als Diolkomponente,
cd₁) 0 bis 1 Gew.-% einer Verbindung mit mindestens drei zur Esterbildung befähigten Gruppen als Verzweiger,
cd₂) 0 bis 2 Gew.-% eines Diisocyanats als Kettenverlängerer,
D) 0 bis 60 Gew.-% weiterer Zusatzstoffe,
wobei die Summe der Gewichtsprozente der Komponenten A) bis D) 100 % ergibt.

2. Polyestermischungen nach Anspruch 1, enthaltend
A) 90 bis 97 Gew.-% Polybutylenterephthalats,
B) 0,1 bis 1 Gew.-%
B1) mindestens eines hoch- oder hyperverzweigten Polycarbonates mit einer OH-Zahl von 1 bis 600 mg KOH/g Polycarbonat (gemäß DIN 53240, Teil 2), oder
B2) mindestens eines hoch- oder hyperverzweigten Polyesters des Typs AₓBy mit x mindestens 1,1 und y mindestens 2,1 oder deren Mischungen
C) 1 bis 15 Gew.-% eines Polyesters aus
ca₁) 40 bis 60 Gew.-% bezogen auf das Gesamtgewicht der Komponenten a1) und a2) mindestens einer Bernstein-, Adipin, oder Sebazinsäure oder deren esterbildende Derivate oder Mischungen davon,
ca₂) 40 bis 60 Gew.-% bezogen auf das Gesamtgewicht der Komponenten a1) und a2) Terephthalsäure oder deren esterbildende Derivate oder Mischungen davon,
cb) 100 mol-% bezogen auf die Komponenten a1) und a2) 1,4-Butandiol oder 1,3-Propandiol oder Mischungen davon als Diolkomponente,
cd₁) 0 bis 1 Gew.-% einer Verbindung mit mindestens drei zur Esterbildung befähigten Gruppen als Verzweiger,
cd₂) 0 bis 2 Gew.-% eines Diisocyanats als Kettenverlängerer,
D) 0 bis 40 Gew.-% weiterer Zusatzstoffe,
wobei die Summe der Gewichtsprozente der Komponenten A) bis D) 100 % ergibt.

3. Polyestermischungen nach den Ansprüchen 1 und 2, in denen die Komponente B1) ein Zahlenmittel des Molekulargewichtes Mₙ von 100 bis 15000 g/mol, eine Glasübergangstemperatur Tg von -80°C bis 140°C und eine Viskosität (mPas) bei 23°C (gemäß DIN 53019) von 50 bis 200000 aufweist.

4. Polyestermischungen nach den Ansprüchen 1 und 2, in denen die Komponente B2) ein Zahlenmittel des Molekulargewichts Mₙ von 300 bis 30000 g/mol, eine Glasübergangstemperatur Tg von -50°C bis 140°C, eine OH-Zahl (gemäß DIN 53240) von 0 bis 600 mg KOH/g Polyester und eine COOH-Zahl (gemäß DIN 53240) von 0 bis 600 mg KOH/g Polyester aufweist.

5. Polyestermischungen nach den Ansprüchen 1 bis 4, in denen das Verhältnis der Komponenten B1): B2) von 1:20 bis 20:1 beträgt.

6. Polyestermischungen nach den Ansprüchen 1 bis 5, enthaltend als Komponente D1) 1 bis 15 Gew.-% eines Schlagzähmodifizierers ausgewählt aus der Gruppe bestehend aus: einem Ein- oder Mehrkomponenten-Copolymerisat auf Basis eines α-Olefins mit 2 bis 8 C-Atomen; eines MBS-Kautschuks; eines Acrylat-Kautschuks, eines TPUs (thermoplastischen Polyurethans) und eines TPEEs (thermoplastischen Polyester-Elastomer).

7. Polyestermischungen nach den Ansprüchen 1 bis 6, enthaltend als Komponente D2) 10 bis 40 Gew.-% Glasfasern.

8. Verwendung der Polyestermischungen gemäß den Ansprüchen 1 bis 7 zur Herstellung von Fasern, Folien und Formkörpern jeglicher Art.

9. Fasern, Folien und Formkörper jeglicher Art erhältlich aus den Polyestermischungen gemäß den Ansprüchen 1 bis 7.

## Claims

1. A polyester mixture, comprising
A) from 30 to 98% by weight of at least one thermoplastic aromatic polyester,
B) from 0.01 to 15% by weight of
B1) at least one highly branched or hyperbranched polycarbonate, or
B2) at least one highly branched or hyperbranched polyester
or a mixture of these
C) from 1 to 20% by weight of a polyester composed of
ca₁) from 40 to 60% by weight, based on the total weight of components a1) and a2), of at least one succinic, adipic, or sebacic acid, or ester-forming derivatives thereof, or a mixture thereof,
ca₂) from 40 to 60% by weight, based on the total weight of components a1) and a2), of terephthalic acid, or ester-forming derivatives thereof, or a mixture thereof,
cb) 100 mol%, based on components a1) and a2), of 1,4-butanediol or 1,3-propanediol, or a mixture thereof, as diol component,
cd₁) from 0 to 1% by weight of a compound having at least three groups capable of ester formation, as branching agent,
cd₂) from 0 to 2% by weight of a diisocyanate, as chain extender,
D) from 0 to 60% by weight of other additives, where the total of the percentages by weight of components A) to D) is 100%.

2. The polyester mixture according to claim 1, comprising
A) from 90 to 97% by weight of polybutylene terephthalate,
B) from 0.1 to 1% by weight of
B1) at least one highly branched or hyperbranched polycarbonate with an OH number of from 1 to 600 mg KOH/g of polycarbonate (to DIN 53240, Part 2), or
B2) at least one highly branched or hyperbranched polyester of AₓB_{y} type, where x is at least 1.1, and y is at least 2.1,
or a mixture of these
C) from 1 to 15% by weight of a polyester composed of
ca₁) from 40 to 60% by weight, based on the total weight of components a1) and a2), of at least one succinic, adipic, or sebacic acid, or ester-forming derivatives thereof, or a mixture thereof,
ca₂) from 40 to 60% by weight, based on the total weight of components a1) and a2), of terephthalic acid, or ester-forming derivatives thereof, or a mixture thereof,
cb) 100 mol%, based on components a1) and a2), of 1,4-butanediol or 1,3-propanediol, or a mixture thereof, as diol component,
cd₁) from 0 to 1% by weight of a compound having at least three groups capable of ester formation, as branching agent,
cd₂) from 0 to 2% by weight of a diisocyanate, as chain extender,
D) from 0 to 40% by weight of other additives, where the total of the percentages by weight of components A) to D) is 100%.

3. The polyester mixture according to claims 1 and 2, in which component B1) has a number-average molar mass Mₙ of from 100 to 15 000 g/mol, a glass transition temperature Tg of from -80°C to 140°C, and a viscosity (mPas) at 23°C (to DIN 53019) of from 50 to 200 000.

4. The polyester mixture according to claims 1 and 2, in which component B2) has a number-average molar mass Mₙ of from 300 to 30 000 g/mol, a glass transition temperature Tg of from -50°C to 140°C, an OH number (to DIN 53240) of from 0 to 600 mg KOH/g of polyester, and a COOH number (to DIN 53240) of from 0 to 600 mg KOH/g of polyester.

5. The polyester mixture according to claims 1 to 4, in which the ratio of components B1): B2) is from 1:20 to 20:1.

6. The polyester mixture according to claims 1 to 5, comprising, as component D1), from 1 to 15% by weight of an impact modifier selected from the group consisting of, a single- or multicomponent copolymer based on an α-olefin having from 2 to 8 carbon atoms, on an MBS rubber, on an acrylate rubber, on a TPU (thermoplastic polyurethane), and on a TPEE (thermoplastic polyester elastomer).

7. The polyester mixture according to claims 1 to 6, comprising, as component D2), from 10 to 40% by weight of glass fibers.

8. The use of the polyester mixture according to claims 1 to 7 for production of fibers, of foils, and of moldings of any type.

9. A fiber, a foil, or a molding of any type obtainable from the polyester mixture according to claims 1 to 7.

## Revendications

1. Mélanges de polyesters, contenant A) 30 à 98% en poids d'au moins un polyester aromatique thermoplastique,
B) 0,01 à 15% en poids
B1) d'au moins un polycarbonate hautement ramifié ou hyperramifîé ou
B2) d'au moins un polyester hautement ramifié ou hyperramifié ou de leurs mélanges
C) 1 à 20% en poids d'un polyester constitué par
ca₁) 40 à 60% en poids, par rapport au poids total des composants a1) et a2), d'au moins un acide succinique, adipique ou sébacique ou de leurs dérivés formant des esters ou de mélanges de ceux-ci,
ca₂) 40 à 60% en poids, par rapport au poids total des composants a1) et a2), d'acide téréphtalique ou de ses dérivés formant des esters ou de mélanges de ceux-ci,
cb) 100% en mole, par rapport aux composants a1) et a2), de 1,4-butanediol ou de 1,3-propanediol ou de mélanges de ceux-ci comme composant diol,
cd₁) 0 à 1% en poids d'un composé présentant au moins trois groupes aptes à la formation d'un ester comme agent de ramification,
cd₂) 0 à 2% en poids d'un diisocyanate comme agent d'allongement de chaîne,
D) 0 à 60% en poids d'autres additifs,
la somme des pour cent en poids des composants A) à D) étant de 100%.

2. Mélanges de polyesters selon la revendication 1, contenant
A) 90 à 97% en poids de poly(téréphtalate de butylène),
B) 0,1 à 1% en poids
B1) d'au moins un polycarbonate hautement ramifié ou hyperramifié présentant un indice d'OH de 1 à 600 mg de KOH/g de polycarbonate (selon la norme DIN 53240, partie 2), ou
B2) d'au moins un polyester hautement ramifié ou hyperramifié du type AₓB_{y} avec x valant au moins 1,1 et y valant au moins 2,1 ou de leurs mélanges
C) 1 à 15% en poids d'un polyester constitué par
ca₁) 40 à 60% en poids, par rapport au poids total des composants a1) et a2), d'au moins un acide succinique, adipique ou sébacique ou de leurs dérivés formant des esters ou de mélanges de ceux-ci,
ca₂) 40 à 60% en poids, par rapport au poids total des composants a1) et a2), d'acide téréphtalique ou de ses dérivés formant des esters ou de mélanges de ceux-ci,
cb) 100% en mole, par rapport aux composants a1) et a2), de 1,4-butanediol ou de 1,3-propanediol ou de mélanges de ceux-ci comme composant diol,
cd₁) 0 à 1% en poids d'un composé présentant au moins trois groupes aptes à la formation d'un ester comme agent de ramification,
cd₂) 0 à 2% en poids d'un diisocyanate comme agent d'allongement de chaîne,
D) 0 à 40% en poids d'autres additifs,
la somme des pour cent en poids des composants A) à D) étant de 100%.

3. Mélanges de polyesters selon les revendications 1 et 2, dans lesquels le composant B1) présente une moyenne numérique du poids moléculaire Mₙ de 100 à 15 000 g/mole, une température de transition vitreuse Tg de -80°C à 140°C et une viscosité (mPa.s) à 23°C (selon la norme DIN 53019) de 50 à 200 000.

4. Mélanges de polyesters selon les revendications 1 et 2, dans lesquels le composant B2) présente une moyenne numérique du poids moléculaire Mₙ de 300 à 30 000 g/mole, une température de transition vitreuse T_{g} de -50°C à 140°C, un indice d'OH (selon la norme DIN 53240) de 0 à 600 mg de KOH/g de polyester et un indice de COOH (selon la norme DIN 53240) de 0 à 600 mg de KOH/g de polyester.

5. Mélanges de polyesters selon les revendications 1 à 4, dans lesquels le rapport des composants B1):B2) est de 1:20 à 20:1.

6. Mélanges de polyesters selon les revendications 1 à 5, contenant comme composant D1) 1 à 15% en poids d'un agent de modification de la résilience choisi dans le groupe constitué par: un copolymère à un ou plusieurs composants à base d'une α-oléfine comprenant 2 à 8 atomes de carbone; un caoutchouc MBS; un caoutchouc d'acrylate, un TPU (polyuréthane thermoplastique) et un TPEE (élastomère de polyester thermoplastique).

7. Mélanges de polyesters selon les revendications 1 à 6, contenant comme composant D2) 10 à 40% en poids de fibres de verre.

8. Utilisation des mélanges de polyesters selon les revendications 1 à 7 pour la fabrication de fibres, de feuilles et de corps façonnés de tous types.

9. Fibres, feuilles et corps façonnés de tous types pouvant être obtenus à partir des mélanges de polyesters selon les revendications 1 à 7.
